# EUROPEAN PATENT APPLICATION

(11) **EP 3 469 952 A1**
(43) Date of publication of application: **17.04.2019**
(21) Application number: 17809785.3
(22) Date of filing: 07.06.2017
(51) Int. Cl.: A47B 81/00, B65G 1/14, B65G 1/20

(54) **SUPPORT DEVICE FOR BARRELS**

(30) Priority: 09.06.2016 ES 201630757 U
(71) Applicant: Alsilo Almacena Y Fluye, S.L., 46540 El Puig (Valencia) (ES)
(72) Inventor: GRACIA LECINA, Luis, 46540 El Puig (Valencia) (ES); MORENO MOLINILLO, José, 46540 El Puig (Valencia) (ES)
(74) Representative: Ungria López, Javier
(86) International application number: PCT/ES2017/070410
(87) International publication number: WO 2017/212100

(57) **Abstract**

The invention relates to a support device for barrels (3), which comprises at least one support module couplable to at least one other support module, each support module comprising at least one pair of support pieces (2) designed to fit removably, by means of fitting means, to at least one pair of parallel longitudinal members (1, 40). The support pieces (2) have an elongate geometry with a bar (21) finishing in two ends (22) that comprise a seating face (24) produced according to a plane inclined with respect to the direction of the longitudinal members (1, 40). The device is formed by at least one support module which is in turn formed by at least one pair of longitudinal members (1, 40) between which is disposed at least one pair of support pieces (2) designed to seat at least one barrel (3) on the seating faces (24).

## Description

### Object of the invention

The present disclosure relates to a support device for barrels, casks or kegs, having the characteristic of being modular, easy to transport, assemble and disassemble, and being stored by modules without requiring a lot of space because of the modular characteristic thereof.

The barrel support device object of the present invention has particular application in the industry dedicated to the manufacture, distribution and sale of equipment for the wine industry and for the industry for making wine and other beverages.

### Technical problem to be solved and Background of the invention

Different support devices for casks or barrels are known in the state of the art.

The document ES 2251319 B1 already describes a modular device for supporting barrels. The support described herein provides a more manageable and easily transportable solution with respect to supports for barrels that were used previously in the state of the art.

Anyway, the solution provided by the document mentioned in the previous paragraph consists of reducing a conventional type of support to a smaller scale, by dividing said support into sections, and allowing said sections to be assembled with each other to form longer supports.

However, each of the support sections described in document ES 2251319 B1 are still too stiff and bulky, which makes them even more difficult to be transported and stored easily by pieces.

The present disclosure describes a support device for barrels with a modular characteristic which increases the ease of transportation, storage and handling of the disassembled parts, while providing a more versatile solution than those found in the state of the art, since the support device object of the present disclosure allows greater freedom when choosing the arrangement of the barrels.

### Description of the invention

The present disclosure describes a support device for barrels having a modular characteristic which provides ease of assembly, transport and storage, and easy handling of the disassembled pieces and great versatility in the arrangement of the barrels or kegs mounted on the support device.

The barrel support device object of the present invention comprises at least one support module equipped with coupling means for coupling to at least one other support module.

Each support module comprises:
- at least one pair of support pieces designed to fit removably, by means of fitting means, to
- at least one pair of parallel longitudinal members.

The support pieces comprise an elongate geometry with a central structure or bar finishing in two ends.

Each end of each support piece comprises a seating face produced according to a plane inclined with respect to the direction of the longitudinal members.

By means of this configuration, the support device for barrels is formed by at least one support module (able to be coupled to other support modules), wherein each support module is in turn formed by at least one pair of longitudinal members between which at least one pair of support pieces is arranged, the support pieces being designed to seat at least one barrel on the seating faces.

Each barrel would be seated on a pair of support pieces.

According to a preferred embodiment of the support device for barrels, the aforementioned fitting means for fitting each support piece into the longitudinal members, consist of a configuration wherein:
- each end of each support piece comprises a geometry in the shape of a hollow mortise with an open ending;
- the longitudinal members comprise extensions that project on both sides of each longitudinal member.

The support pieces fit into the longitudinal members by means of inserting respective first extremities of respective extensions facing the respective longitudinal members into the respective open endings of the respective ends of each support piece.

According to a preferred embodiment, the support device is configured to fit at least one pair of support pieces also on the lower portion of the longitudinal members, i.e., on respective second extremities of respective extensions facing each longitudinal member, inserting the respective second extremities of the respective extensions into the respective open endings of the respective open endings of each support piece.

As described in the previous paragraph, it enables a support module (which is supporting barrels) to be arranged on a lower row of barrels supported by another support module.

According to an exemplary embodiment of the support device for barrels, the coupling means between support modules consist of a configuration wherein each longitudinal member is equipped with a male coupling element on a first ending of the longitudinal member and a female coupling element on a second ending of the longitudinal member.

According to a first embodiment of the device, the longitudinal members are independent pieces that are joined together by means of the support pieces in order to form the support module.

According to a second embodiment of the device, each support module comprises a frame made up of the longitudinal members joined to each other by means of rods.

According to the second embodiment, the first extremities of the extensions of the longitudinal members of the frame protrude from said longitudinal members with a length less than the length with which the second extremities protrude from the extensions of the longitudinal members of the frame.

Preferably, the bar of each support piece comprises a "U"-shaped profile geometry.

This "U"-shaped geometry of the bar allows, among other things, for the second embodiment of the support device, which when each support piece fits by the first extremities of extensions facing each other of respective longitudinal members of the frame, each rod of the frame to stay fitted in the bar of the support piece.

According to a possible embodiment of the support device for barrels, the support pieces are made of plastic material.

Preferably, according to the first embodiment of the support device for barrels, the longitudinal members are made of plastic material.

Likewise, preferably, according to the first embodiment of the support device for barrels, the frame is made of metal material.

However, any of the elements mentioned in the three previous paragraphs can be made of other materials, such as pultruded material.

In summary, according to the first embodiment of the support device for barrels, and according to the embodiment wherein each support module has the capacity to store two barrels, each support module comprises two parallel longitudinal members, four extensions aligned in each longitudinal member, one male coupling element on a first ending of each longitudinal member and one female coupling element on a second ending of each longitudinal member. Likewise, preferably, each longitudinal member comprises an opening between each consecutive pair of extensions, wherein said opening is provided for the insertion of the blades of a forklift machine, in order to lift and move the support module loaded with the barrels.

Notwithstanding what was mentioned in the previous paragraph, for embodiments wherein it is desired to modify the number of barrels that each support module can store, it is enough to change the design of the support module, by modifying the length of the longitudinal members and also modifying the number of extensions of each longitudinal member, depending on the number of barrels to be stored.

Also, in summary, according to the second embodiment of the support device for barrels, and according to the embodiment wherein each support module has the capacity to store two barrels, each longitudinal member of each frame comprises four extensions aligned in each longitudinal member, one male coupling element on a first ending of each longitudinal member and one female coupling element on a second ending of each longitudinal member.

Notwithstanding what was mentioned in the previous paragraph, for embodiments wherein it is desired to modify the number of barrels that each support module can store, it is enough to change the design of the support module, by modifying the length of the longitudinal members of the frame and also modifying the number of extensions of each longitudinal member of the frame, depending on the number of barrels to be stored.

By means of the described configuration of the support device for barrels, it is possible to select the position along the longitudinal members where the support parts are to be fitted and, therefore, the position where the kegs or barrels are to be deposited, providing with this solution a great versatility in the arrangement and storage of the barrels.

### Brief description of the figures

As a part of the explanation of at least one exemplary embodiment of the support device for barrels object of the present disclosure, the following figures have been included.
Figure 1: Shows an exploded perspective view of a first embodiment of the support device for barrels.
Figure 2: Shows a detailed view of one of the longitudinal members of the support device for barrels, according to the first embodiment of the support device for barrels.
Figure 3: Shows a detailed view of a support piece of the support device for barrels.
Figure 4: Shows an exploded perspective view of a second embodiment of the support device for barrels.
Figure 5: Shows a detailed view of the frame of the second embodiment of the support device for barrels.
Figure 6: Shows a perspective of the support device for barrels, with the barrels arranged on the device.
Figure 7: Shows a perspective of the support device for barrels, with the barrels arranged in a staggered formation on the device.

### Detailed description

The present disclosure relates, as mentioned previously, to a support device for barrels (3).

The support device for barrels (3) comprises at least one support module, wherein each support module has the capacity to store a certain number of barrels (3).

Typically, each support module is able to store two barrels (3) in a line, although support modules able to store a different number of barrels (3) can be made.

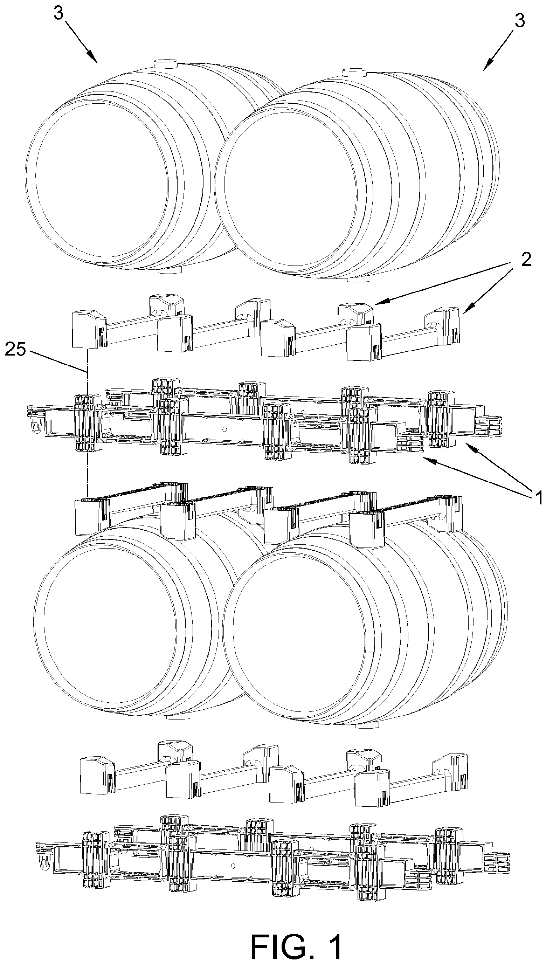

Figure 1 shows an exploded perspective view of a first embodiment of the support device for barrels (3) wherein two support modules are seen, an upper one and a lower one, each support module with the capacity to store two barrels (3) in line, wherein the upper module is configured to be seated on the lower row of barrels (3), which in turn is seated on the lower support module.

According to the first embodiment, each support module of the device comprises two longitudinal members (1), joined to each other by means of a plurality of support pieces (2). Both the longitudinal members (1) and the support pieces (2) are arranged in a substantially horizontal position when in use supporting barrels (3). In the remainder of the present detailed description, this substantially horizontal position will be assumed in order to describe the other elements of the device.

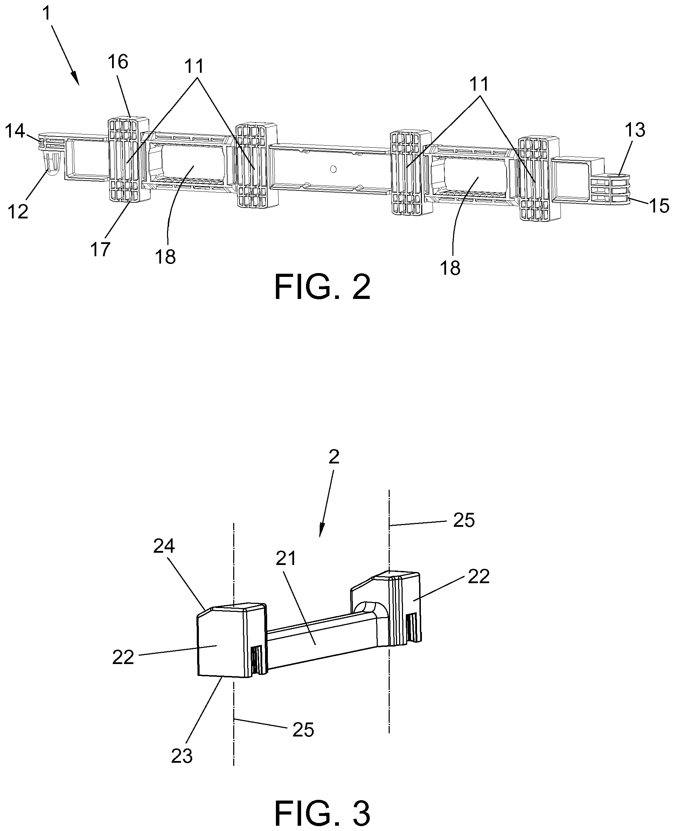

Figure 2 shows a perspective view of a longitudinal member (1).

Figure 3 shows a perspective view of a support piece (2).

The support pieces (2) are common to the two proposed embodiments of the support device for barrels (3). Said support pieces (2) have the function of accommodating or wedging the barrels (3).

Notwithstanding what was mentioned in the previous paragraph, the support pieces (2) carry out, in the first embodiment, the additional function of ties between the longitudinal members (1), such that they give consistency and rigidity to the structure of the device.

The longitudinal members (1) have a geometry in the form of an elongate board and are provided with a plurality of extensions (11) by way of vertebrae, the extensions (11) being aligned along each longitudinal member (1), and projecting vertically on either side of each longitudinal member (1), such that a first extremity (16) of each extension (11) projects upwards and a second extremity (17) of each extension (11) projects downwards from the longitudinal member (1).

The longitudinal members (1) may also have openings (18) for inserting the blades of a forklift machine, said openings (18) preferably being positioned underneath the position provided for the barrels (3).

Each longitudinal member (1) is equipped with a male coupling element (12) on a first ending (14) of the longitudinal member (1) and a female coupling element (13) on a second ending (15) of the longitudinal member (1).

The device is configured to assemble both longitudinal members (1) such that the first ending (14) and the second ending (15) of a longitudinal member (1) are respectively facing the first ending (14) and the second ending (15) of the other longitudinal member (1), and so that the extensions (11) of either longitudinal member (1) are facing each other along the length of the longitudinal members (1).

The support pieces (2) comprise an elongate geometry with a horizontal bar (21) with two ends (22) in the form of a hollow mortise extending vertically, transversely to the bar (21), on both sides of the bar (21). Each of the ends (22) comprises at least one open ending (23).

The bar (21) of the support pieces preferably has a geometry with a "U"-shaped profile.

The support pieces (2) are configured to fit into the longitudinal members (1), by means of inserting the first extremity (16) of an extension (11) of a longitudinal member (1) into the open ending (23) of an end (22) of the support piece (2) and by means of inserting the first extremity (16) of the extension (11) facing the other longitudinal member (1) into the open ending (23) of the other end (22) of the support piece (2).

The support pieces (2) extend between both longitudinal members (1) of the device, such that the bar (21) extends in the direction transversal to the direction of the extensions (11) of the longitudinal members (1), such that the ends (22) of each support piece (2) extend according to an axis (25) aligned with the extensions (11) of the longitudinal members (1).

Each of the ends (22) of the support piece (2) comprises a seating face (24) in the position opposite from the open ending (23). The seating face (24) can be open or closed. The seating face (24) is made according to a cross-sectional plane inclined with respect to the axis (25) of the ends (22). In any case, the seating face (24) is arranged according to a plane inclined with respect to the direction of the longitudinal members (1).

The device is configured so that each barrel (3) is seated on the seating faces (24) of the ends (22) of the support pieces (2) located adjacently along the longitudinal members (1).

Therefore, the seating faces (24) of the ends (22) of the two support pieces (2) upon which each barrel (3) is seated are arranged, with respect to each other, divergently in an upwards direction, that is, such that they enable the barrel (3) to be accommodated resting on said seating faces (24).

Preferably, the support pieces (2) also fit on the opposite side of the longitudinal members (1), that is, by means of inserting the second extremity (17) of an extension (11) of a longitudinal member (1) into the open ending (23) of an end (22) of another support piece (2) and by means of inserting the second extremity (17) of the extension (11) facing the other longitudinal member (1) into the open ending (23) of the other end (22) of said other support piece (2).

Thus, by means of fitting the support pieces (2) on the lower side of the longitudinal members (1), a support module of the support device for barrels (3) can be arranged seated on a row of barrels (3) which in turn rests on another support module of the support device for barrels (3). This enables a structure of rows of barrels (3) stacked on top of each other to be established.

Likewise, by means of the male-female coupling of longitudinal members (1), by means of inserting male coupling elements (12) into female coupling elements (13) of aligned and adjacent longitudinal members (1), it enables the rows of barrels (3) stacked on the support device to be elongated by arranging support modules of the device aligned one after the other.

Moreover, it is worth mentioning that the described configuration enables the selection of the extensions (11) of the longitudinal members (1) into which the support pieces (2) are to be fitted, equipping the device with an additional degree of freedom to configure the storage of barrels (3) and the spacing between them. The barrels (3) will therefore be able to be aligned with the desired space between them, and also be arranged in vertical columns of barrels (3) or in zig-zag or staggered formations, in support modules of the support device seated on lower rows of barrels (3).

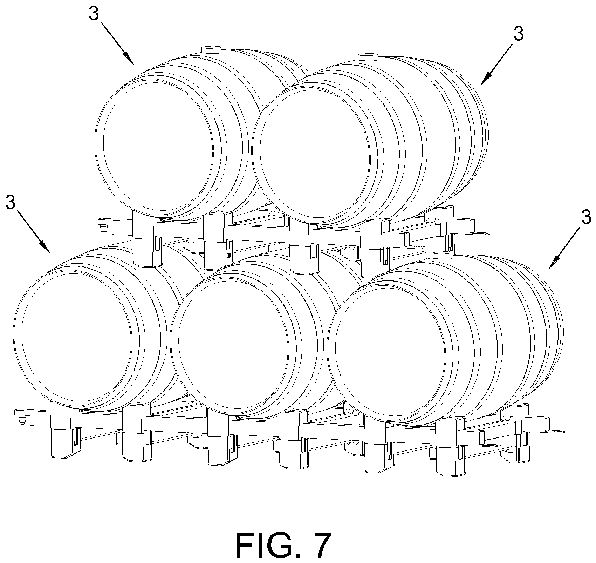

Figure 7 shows a perspective view of the barrels (3) assembled in a staggered formation on support modules of the device. In Figure 7 a lower support module is shown with capacity to store three barrels (3) in line.

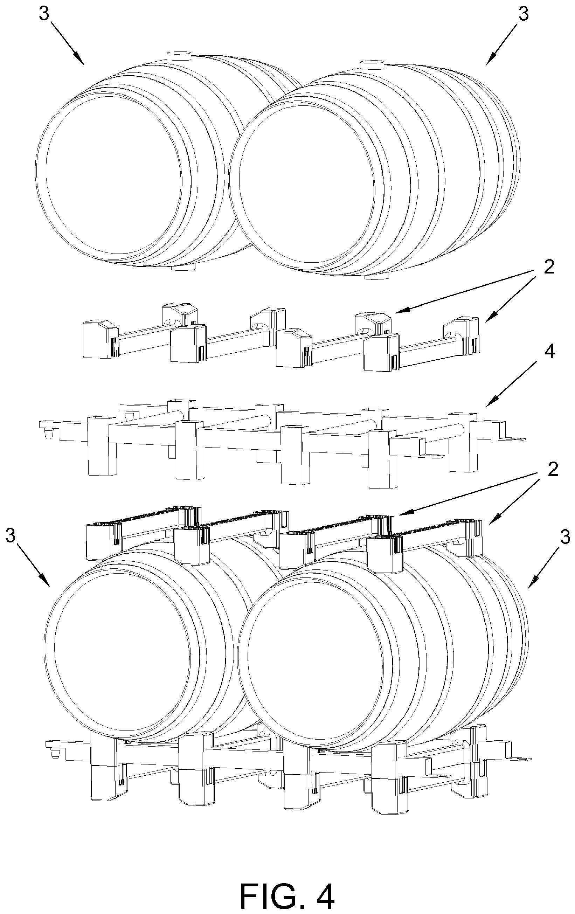

Figure 4 shows an exploded perspective view of a second embodiment of the support device for barrels (3).
The second embodiment of the support device is similar to the first embodiment, although in the second embodiment the longitudinal members (40) make up a frame (4), consisting of said longitudinal members (40) joined by means of rods (42).

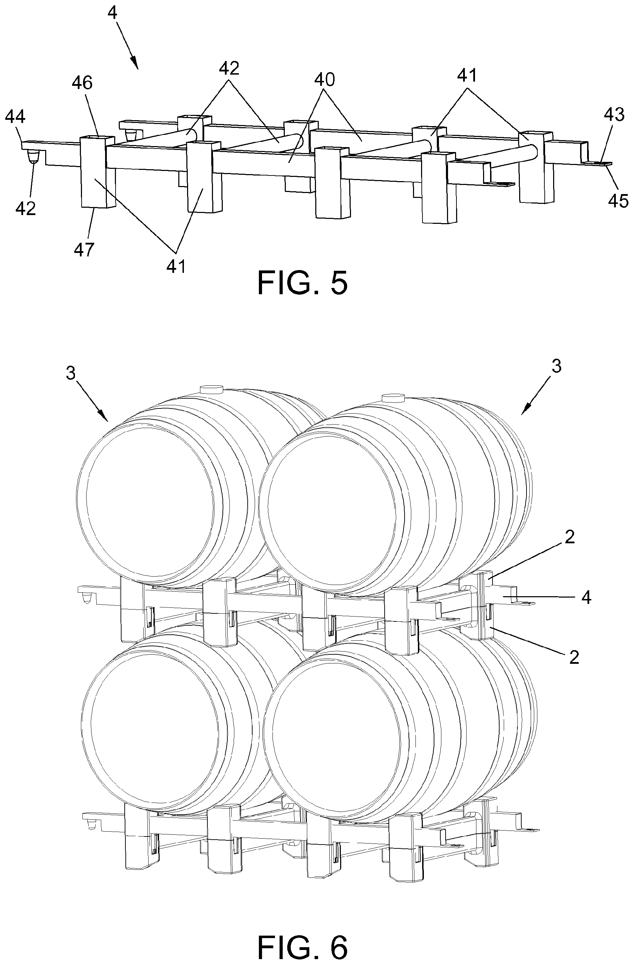

Figure 5 shows a detailed view of the frame (4).

Extensions (41) project on both sides (upwards and downwards according to the position thereof when in normal use, horizontal) of the longitudinal members (40) of the frame (4).

Each extension (41) comprises a first extremity (46), or upper extremity, and a second extremity (47) or lower extremity.

The second extremity (47) protrudes from the corresponding longitudinal member (40) in a length longer than that with which the first extremity (46) protrudes with respect to the longitudinal member (40).

The extensions (41) of the longitudinal members (40) of the frame (4) are inserted into the open endings (23) of the ends (22) of the support pieces (2) in the same way as in the case of the extensions (11) of the longitudinal members (1) in the first embodiment of the device.

When the support pieces (2) fit into the frame (4), the rods (42) are inserted into the "U"-shaped profile of the bars (21) of the support pieces (2) which fits on the upper extremities (46) of the extensions (41). These latter support pieces (2), when inserted, butt up against the rods (42).

The support pieces (2) which fit on the lower extremities (47) of the extensions (41) butt up, when inserted, against said lower extremities (47) which hit against the lower portion of the mortise of the ends (22).

Similarly, as occurred with the longitudinal members (1) in the first embodiment of the support device, the frame (4) of the second embodiment also has a male coupling element (42) on a first ending (44) of each longitudinal member (40), and a female coupling element (43) on a second ending (45) of each longitudinal member (40).

Finally, Figure 6 shows a perspective view of the assembled support device, with the barrels (3) accommodated in two rows, on top of each other, each row of barrels (3) being accommodated on a respective support module of the support device.

The support module on which the upper row of barrels (3) is seated is in turn accommodated on the barrels (3) of the lower row of barrels (3).

The longitudinal members (1) of the first embodiment of the support device for barrels (3) are preferably made of plastic material.

The support pieces (2) are also preferably made of plastic material.

Moreover, the frame (4) corresponding to the second embodiment of the support device for barrels (3) is preferably made of metal material.

Additionally, there is also the possibility of making any of the elements of the two embodiments of any material, whether it be plastic, metal with a load additive, minerals or metals or other manufacturing processes for example such as pultrusion.

## Claims

1. A support device for barrels (3) comprising at least one support module equipped with coupling means for coupling to at least another support module, **characterised in that** each support module comprises:
- at least one pair of support pieces (2) designed to fit removably, by means of fitting means, to
- at least one pair of parallel longitudinal members (1, 40);
wherein the support pieces (2) comprise an elongate geometry with a bar (21) finishing in two ends (22);
wherein each end (22) of each support piece (2) comprises a seating face (24) produced according to a plane inclined with respect to the direction of the longitudinal members (1, 40);
such that the device is formed by at least one support module which is in turn formed by at least one pair of longitudinal members (1, 40) between which is disposed at least one pair of support pieces (2) designed to seat at least one barrel (3) on the seating faces (24).

2. The support device for barrels (3) according to claim 1, **characterised in that** the fitting means of each support piece (2) in the longitudinal members (1, 40) consist of a configuration wherein:
- each end (22) of each support piece (2) comprises a geometry in the shape of a hollow mortise with an open ending (23);
- the longitudinal members (1, 40) comprise extensions (11, 41) that project on both sides of each longitudinal member (1, 40);
wherein the support pieces (2) fit into the longitudinal members (1, 40) by means of inserting respective first extremities (16, 46) of respective extensions (11, 41) facing the respective longitudinal members (1, 40) into the respective open endings (23) of the respective ends (22) of each support piece (2).

3. The support device for barrels (3) according to claim 2, **characterised in that** it is configured to fit at least one pair of support pieces (2) on respective second extremities (17, 27) of respective extensions (11, 41) facing each longitudinal member (1, 40), inserting the respective second extremities (17, 27) of the respective extensions (11, 41) into the respective open endings (23) of the respective ends (22) of each support piece (2).

4. The support device for barrels (3) according to claim 1, **characterised in that** the coupling means between support modules consist of a configuration wherein each longitudinal member (1, 40) is equipped with a male coupling element (12, 42) on a first ending (14, 44) of the longitudinal member (1, 40) and a female coupling element (13, 43) on a second ending (15, 45) of the longitudinal member (1, 40).

5. The support device for barrels (3) according to claim 1, **characterised in that** each support module comprises a frame (4) made up of the longitudinal members (40) joined together by means of rods (42).

6. The support device for barrels (3) according to claims 3 and 5, **characterised in that** the first extremities (46) of the extensions (41) protrude from the longitudinal members (40) with a length smaller than the length with which the second extremities (47) protrude from the extensions (41).

7. The support device for barrels (3) according to claim 6, **characterised in that** the bar (21) of each support piece (2) comprises a "U"-shaped profile geometry, such that when each support piece (2) fits on the first extremities (46) of extensions (41) facing each other, each rod (42) of the frame (4) stays fitted in the bar (21) of the support piece (2).

8. The support device for barrels (3) according to claim 1, **characterised in that** the support pieces (2) are made of plastic material.

9. The support device for barrels (3) according to claim 1, **characterised in that** the support pieces (2) are made of pultruded material.

10. The support device for barrels (3) according to claim 1, **characterised in that** the longitudinal members (1) are made of plastic material.

11. The support device for barrels (3) according to claim 1, **characterised in that** the longitudinal members (1) are made of pultruded material.

12. The support device for barrels (3) according to claim 5, **characterised in that** the frame (4) is made of metal material.

13. The support device for barrels (3) according to claim 5, **characterised in that** the frame (4) is made of pultruded material.

14. The support device for barrels (3) according to claim 1, **characterised in that** each support module comprises two parallel longitudinal members (1), four extensions (11) aligned in each longitudinal member (1), an opening (18) between each consecutive pair of extensions (11) of each longitudinal member (1), a male coupling element (12) in a first ending (14) of each longitudinal member (1) and a female coupling element (13) in a second ending (15) of each longitudinal member (1).

15. The support device for barrels (3) according to claim 6, **characterised in that** each longitudinal member (40) of each frame (4) comprises four extensions (41) aligned in each longitudinal member (40), a male coupling element (42) in a first ending (44) of each longitudinal member (40) and a female coupling element (43) in a second ending (45) of each longitudinal member (40).
